# EUROPEAN PATENT APPLICATION

(11) **EP 4 235 431 A1**
(43) Date of publication of application: **30.08.2023**
(21) Application number: 21896804.8
(22) Date of filing: 12.11.2021
(51) Int. Cl.: G06F 11/07

(54) **AUTOMOBILE BUS FAULT DIAGNOSIS METHOD AND APPARATUS, AND COMPUTING DEVICE**

(30) Priority: 30.11.2020 CN 202011371174
(71) Applicant: Autel Intelligent Technology Corp., Ltd., Shenzhen, Guangdong 518055 (CN)
(72) Inventor: WANG, Weilin, Shenzhen, Guangdong 518055 (CN)
(74) Representative: Gulde & Partner
(86) International application number: PCT/CN2021/130232
(87) International publication number: WO 2022/111303

(57) **Abstract**

Embodiments of the present invention relate to the technical field of automobile inspection, and disclose an automobile bus fault diagnosis method, apparatus and computing device, the method comprising: transmitting a communication instruction to an automobile; analyzing the communication fault code and a power supply state of the automobile control unit if a communication fault code fed back by an automobile control unit is received; analyzing a layout attribute of a part of the automobile control unit if an answering signal fed back by the part of the automobile control unit is received, analyzing a power supply state of the part of the automobile control unit according to the layout attribute, determining a to-be-measured bus range according to the layout attribute and the power supply state, and measuring a bus electrical characteristic within the bus range ; determining the to-be-measured bus range and measuring the bus electrical characteristic within the bus range if no answering signal fed back by the automobile control unit is received. In this way, embodiments of the present invention can quickly locate the specific location of an automobile bus fault and improve customer service efficiency.

## Description

### CROSS-REFERENCE TO RELATED APPLICATIONS

This application claims priority to Chinese Patent Application No. 202011371174.0, entitled "Automobile Bus Fault Diagnosis Method, Apparatus and Computing Device", filed on Monday, November 30, 2020, by China Patent Office, which is incorporated herein by reference in its entirety.

### TECHNICAL FIELD

The present application relates to the technical field of automobile inspection, in particular to an automobile bus fault diagnosis method, apparatus and computing device.

### BACKGROUND

In the field of automobile fault analysis, the fault diagnosis of automobile control unit ECU is significant. For modern automobiles, important control components and devices are monitored and controlled by an automobile control unit ECU, and the status and fault information is stored in the automobile control unit ECU in real-time for diagnostic tools to read and analyze. The automobile control unit ECU is connected via a bus or a gateway to a diagnostic interface DLC, and a diagnostic tool is connected to the diagnostic interface DLC to access each automobile control unit ECU to obtain status and related information of each component in the current automobile. If the bus connected to each automobile control unit (ECU) fails, the diagnosis result may be incorrect; therefore, how to correctly diagnose the fault of the bus becomes a problem to be solved by a person skilled in the art.

### SUMMARY

In view of the foregoing, embodiments of the present invention provide an automotive bus fault diagnosis method, apparatus and computing device that overcome or at least partially solve the foregoing problems.

According to an aspect of an embodiment of the present invention, provided is an automobile bus fault diagnosis method including: transmitting a communication instruction to the automobile to inspect a communication condition of each automobile control unit in the automobile; analyzing the communication fault code and a power supply state of the automobile control unit to locate a bus fault if a communication fault code fed back by an automobile control unit is received; analyzing a layout attribute of a part of the automobile control unit if an answering signal fed back by the part of the automobile control unit is received, analyzing a power supply state of the part of the automobile control unit according to the layout attribute, determining a to-be-measured bus range according to the layout attribute and the power supply state, and measuring a bus electrical characteristic within the bus range to locate a bus fault; determining the to-be-measured bus range and measuring the bus electrical characteristic within the bus range to locate a bus fault if no answering signal fed back by the automobile control unit is received.

In an alternative, the layout attributes include at least one of: whether to connect the same automobile gateway, whether to be located in the same power supply domain, whether to be located in the same bus and the adjacent and sequential relationship between some of the automobile control units.

In an alternative, said analyzing the communication fault code includes: weighting the communication fault codes according to an influence range of the communication fault codes, a causal relationship between the communication fault codes and a severity degree if there are a plurality of the communication fault codes; prioritizing a plurality of the communication fault codes according to a predetermined rule; prioritizing bus fault location for the communication fault code with high priority.

In an alternative, said determining a to-be-measured bus range according to the layout attribute and the power supply state, and measuring a bus electrical characteristic within the bus range to locate a bus fault includes: determining a to-be-measured bus range corresponding to a part of the automotive control unit according to the layout attribute and the power supply state; applying an oscilloscope and/or a multimeter to the determined to-be-measured bus range to measure an electrical characteristic of the bus, wherein the electrical characteristic includes: bus waveform, voltage, resistance and current; and locating a bus fault according to the electrical characteristic application guidance mode.

In an alternative, said locating a bus fault according to the electrical characteristic application guidance mode includes: analyzing a bus fault type according to the electrical characteristic, the bus fault type including: one of open bus, short circuit to ground, short circuit to power supply, short circuits among buses, bus interference; locating a bus fault according to the bus fault type combined algorithm application guide mode, wherein the algorithm includes one of a node method, a plug-in method, a short circuit method and a disturbance method.

In an alternative, the automobile bus fault diagnosis method further includes: determining a troubleshooting scheme according to the reason and location of the bus fault once a bus fault is located; troubleshooting the bus fault according to the troubleshooting scheme.

In an alternative, said troubleshooting the bus fault according to the troubleshooting scheme further includes: verifying the troubleshot result, and if the bus fault has been excluded, ending the flow; re-measuring the electrical characteristics and recalculating the inspection scheme until the bus fault is excluded if the bus fault has not been excluded.

According to another aspect of an embodiment of the present invention, provided is an automobile bus fault diagnosis apparatus including: a communication inspecting unit configured to transmit a communication instruction to the automobile to inspect a communication condition of each automobile control unit in the automobile; a fault code analysis unit configured to analyze the communication fault code and a power supply state of the automobile control unit to locate a bus fault if a communication fault code fed back by an automobile control unit is received; a first intelligent analysis unit configured to analyze a layout attribute of a part of the automobile control unit if an answering signal fed back by the part of the automobile control unit is received, and analyze a power supply state of the part of the automobile control unit according to the layout attribute, and determine a to-be-measured bus range according to the layout attribute and the power supply state, and measure a bus electrical characteristic within the bus range to locate a bus fault; and a second intelligent analysis unit configured to determine the to-be-measured bus range and measure the bus electrical characteristic within the bus range to locate a bus fault if no answering signal fed back by the automobile control unit is received.

According to another aspect of an embodiment of the present invention, provided is a computing device including: a processor, a memory, a communication interface, and a communication bus, wherein the processor, the memory, and the communication interface communicate with each other via the communication bus;
the memory is configured to store at least one executable instruction that causes the processor to perform the steps of the automobile bus fault diagnosis method described above.

According to yet another aspect of an embodiment of the present invention, provided is a computer storage medium having stored therein at least one executable instruction for causing the processor to perform the steps of the automobile bus fault diagnosis method described above.

According to an embodiment of the present invention, a communication condition of each automobile control unit in an automobile is inspected by transmitting a communication instruction to the automobile; analyzing the communication fault code and a power supply state of the automobile control unit to locate a bus fault if a communication fault code fed back by an automobile control unit is received;

if an answering signal fed back by a part of the automobile control unit is received, a layout attribute of the part of the automobile control unit is analyzed, a power supply state of the part of the automobile control unit is analyzed according to the layout attribute, a to-be-measured bus range is determined according to the layout attribute and the power supply state, and a bus electrical characteristic is measured within the bus range to locate a bus fault; if no answering signal fed back by the automobile control unit is received, a to-be-measured bus range is measured, and bus electrical characteristics is measured within the bus range to locate a bus fault, communication-capable bus fault check is supported, and communication-incapable bus fault check is also supported, through which a specific position of an automobile bus fault can be quickly located, and the efficiency of user troubleshooting can be improved.

While the foregoing is directed to embodiments of the present invention, other and further embodiments of the invention may be devised without departing from the basic scope thereof, and the scope thereof is determined by the claims that follow.

### BRIEF DESCRIPTION OF THE DRAWINGS

Various other advantages and benefits will become apparent to a person skilled in the art upon reading the following detailed description of the preferred embodiments. The drawings are only for purposes of illustrating the preferred embodiments and are not to be construed as limiting the invention. Moreover, like reference numerals designate like parts throughout the several views. In the drawings:
FIG. 1 is a functional block diagram of an automobile bus fault diagnosis system according to an embodiment of the present invention;
FIG. 2 shows a schematic view of a diagnostic analysis tool according to an embodiment of the present invention;
FIG. 3 is a schematic flow chart showing an automobile bus fault diagnosis method according to an embodiment of the present invention;
FIG. 4 is a schematic diagram showing a topology structure of an automobile power supply line of an automobile bus fault diagnosis method according to an embodiment of the present invention;
FIG. 5 shows an iterative schematic diagram of an automobile bus fault diagnosis method according to an embodiment of the present invention;
FIG. 6 shows a schematic diagram of yet another automobile bus fault diagnosis method according to an embodiment of the present invention;
FIG. 7 is a schematic view showing a configuration of an automobile bus fault diagnosis apparatus according to an embodiment of the present invention;
FIG. 8 illustrates a block diagram of a computing device according to an embodiment of the present invention.

### DETAILED DESCRIPTION OF THE INVENTION

Hereinafter, exemplary embodiments of the present invention will be described in more detail with reference to the accompanying drawings. While the drawings show exemplary embodiments of the invention, it should be understood that the invention may be embodied in various forms and should not be construed as limited to the embodiments set forth herein. Rather, these embodiments are provided so that the disclosure will be thorough and complete, and will fully convey the scope of the invention to a person skilled in the art.

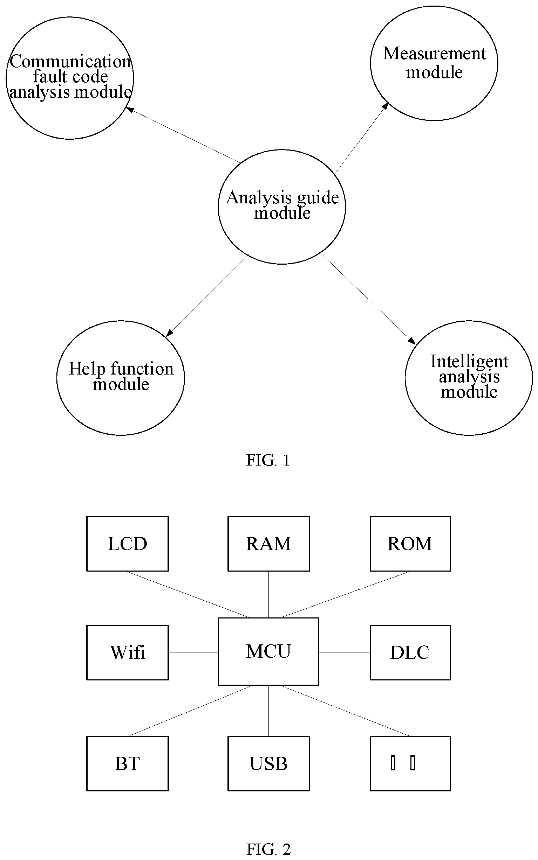

FIG. 1 shows a functional block diagram of an automobile bus fault diagnosis system according to an embodiment of the present invention. As shown in FIG. 1, an automobile bus fault diagnosis system includes: functional modules such as an analysis wizard module, a communication fault code analysis module, a measurement module, an intelligent analysis module and a help functional module.

The communication fault code analysis module is mainly configured to diagnose the normal working condition of the bus. The automobile bus fault diagnosis system can read the stored bus fault information from the automobile control unit ECU, and analyze the bus fault inspection direction according to the fault information. For some modern automobiles, important automobile control units generally have multiple bus backups, and these components can be accessed from the backup bus if a fault occurs on one of the buses; some buses have a bus fault inspection mechanism, such as a low-speed CAN bus, which can switch to single-wire mode or other modes when a bus fault occurs, as far as possible to ensure that the bus can still communicate. Suggestions are prioritized, including that the diagnostic bus can work, reading the bus fault of the communication fault code of the ECU, making full use of the self-diagnosis function of the ECU, reading the communication fault code from the ECU, and repairing according to the communication fault code.

When the bus is abnormal (including diagnostic bus), the ECU communication fails, the physical and electrical fault of bus needs to be analyzed, and the type and range of bus fault needs to be analyzed through measurement module, such as power supply bus fault, open communication line and short circuit.

The intelligent analysis module mainly provides a customer with the support for accelerating the fault resolution, such as quickly finding the bus fault point of the communication line, analyzing the specific sub-network of bus fault occurrence, calculating the priority of bus fault inspection, etc. That is, the bus faults are sorted, summarized and classified, the most likely causes and locations of bus faults are analyzed, and a most efficient troubleshooting scheme is calculated.

A help function module mainly provides users with some maintenance data, including bus topology diagram, circuit diagram, site diagram and waveform diagram. Based on this help information, experienced service personnel can quickly analyze the cause of the bus fault, such as the state of the topology map, and quickly understand the approximate scope of the bus fault. For some inexperienced service personnel, you can learn and understand the automotive system as soon as possible based on help information.

The bus of the automobile bus fault diagnosis system of the embodiment of the present invention supports bus types such as CAN, FlexRay, MOST, Etherent, LIN and K-Line; the automobile bus fault diagnosis system can be applied to most passenger automobiles, and the commercial automobile bus fault analysis can be supported by changing the DLC standard of diagnostic connection interface. The diagnostic connection interface DLC can be integrated on the automobile bus fault diagnosis system (i.e., a diagnostic tool), or can be not integrated on the automobile bus fault diagnosis system in a separate manner, and is transferred to the automobile bus fault diagnosis system via other interfaces.

The automobile bus fault diagnosis system of the embodiment of the present invention is a diagnostic analysis tool, and as shown in FIG. 2, a product scheme of the diagnostic analysis tool includes: master MCU, memory RAM and ROM, display LCD, communication Interface WiFi, BT, USB, battery, automotive Communication Interface DLC, etc. DLC supports the SAE J1962/ISO 15031-3 standard. Bus analysis runs on the platform as application software. The diagnostic analysis tool may be provided in an electronic device, and may be embodied on a platform such as a mobile tablet, personal computer, notebook computer, etc.

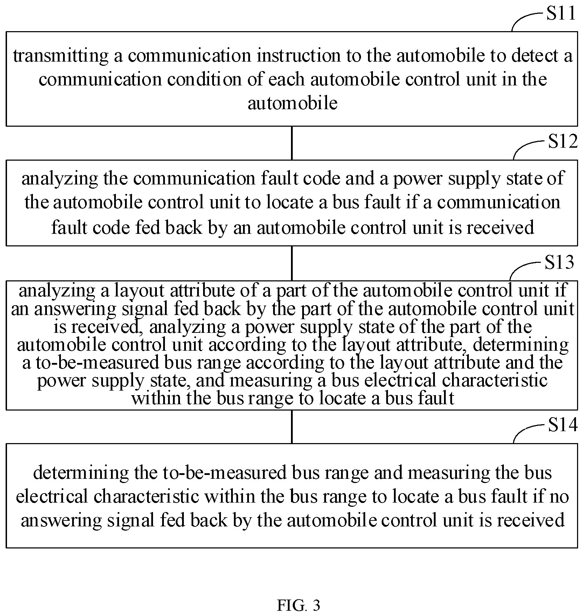

FIG. 3 is a schematic flow chart showing an automobile bus fault diagnosis method according to an embodiment of the present invention. The method is performed by an electronic device. The electronic device may be a mobile phone, a tablet, a notebook computer, etc. The electronic product may be a diagnostic analysis tool as described above, or a device carrying an automotive bus fault diagnosis system. As shown in FIG. 3, the automobile bus fault diagnosis method includes:
Step S11: transmitting a communication instruction to the automobile to inspect a communication condition of each automobile control unit in the automobile.

According to an embodiment of the invention, it is diagnosed whether the communication with the automobile gateway is normal; if it is normal, each of the automobile control units is scanned in an inquiry response manner to inspect whether communication between each of the automobile control units is normal. If the automobile control unit ECU asks for a response, the fault code is read. If there is no communication fault code, then the communication is OK, and the flow ends; otherwise, step S12 is performed subsequently. If the ECU query is not answered, step S13 is performed subsequently.

In diagnosing whether the communication with the automobile gateway is normal, one or more communication lines or communication protocols predetermined are applied to transmit a command to the automobile gateway according to the Automobile Identification Number (VIN) of the automobile to determine whether the communication is normal according to whether there is an answer. Specifically, it is determined mainly by transmitting a communication instruction to the automobile gateway and checking whether the other party has an answer, and it is usually the most common method to query the automobile VIN. For different brands and models of cars, the communication lines and diagnostic communication protocols used by the diagnostic connection interface DLC may be inconsistent. In order to support a large number of automobile models, various situations need to be tried when the software queries, to prevent the misjudgment of communication inspection results caused by the selection of communication lines or communication protocols. In order to improve efficiency, communication lines and communication protocols are preferably tried with a higher probability, such as CAN communication.

If the inspection fails by an automatic inspection method, it is necessary to manually select the communication mode and protocol, and the communication line and communication protocol adopted by DLC communication can be determined through such features as automobile brand, model, annual payment and engine configuration.

Step S12: analyzing the communication fault code and a power supply state of the automobile control unit to locate a bus fault if a communication fault code fed back by an automobile control unit is received;
According to an embodiment of the invention, bus faults can be classified into three categories: a communication fault code can be communicated, and a part of the automobile control unit feeds back an answering signal, and incapability of communication. For the first two cases, generally due to the local bus fault of bus or the bus fault of some automobile control units, the power supply bus can be preferentially analyzed, and if the power supply of bus or key gateway and other component units is abnormal, the power supply line troubleshooting will be completed and other bus faults will be continuously checked.

In step S12, after receiving the communication fault code, first performing bus power supply state analysis, analyzing whether the power supply state of each automobile control unit is normal according to the topology structure of the power supply line, and performing bus fault location on the automobile control unit with abnormal power supply.

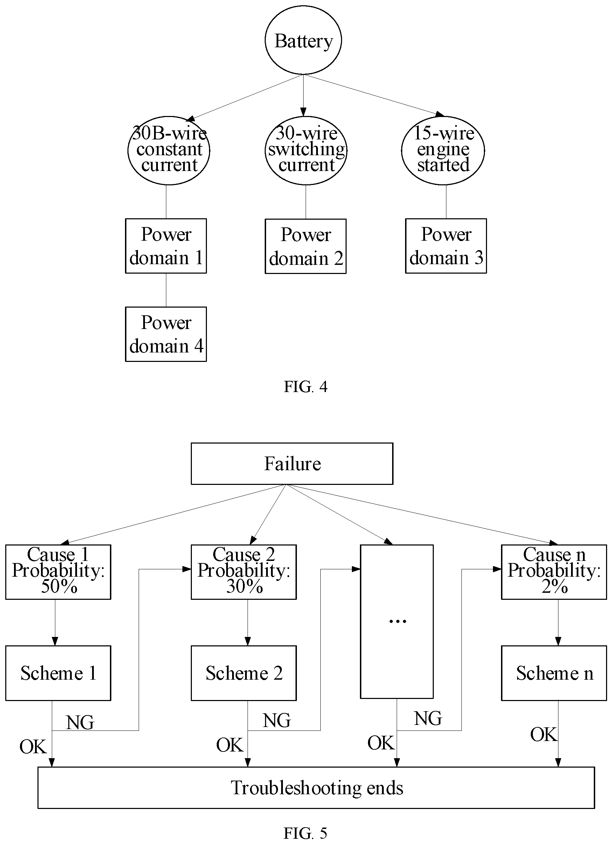

The topology structure of the automobile power supply line is shown in FIG. 4, which is a tree-shaped topological structure, and the power supply is connected to a power consumption domain via a fuse. 30B is a common power supply and can supply power without turning on a key; line 30 is powered only after the key is turned on; line 15 provides power only after the engine is started. According to an embodiment of the invention, it is determined whether the power supply state of a certain automobile control unit is normal, and it is compared whether other nodes of the same level or nodes of the higher level are normal according to the characteristics of the tree structure. If other automobile control units at the same level can work normally, the bus fault mainly occurs in the automobile control unit itself (including power supply or communication); otherwise, reverse tracing is required to find the position most likely having bus fault.

A plurality of automotive control units that have bus faults, referred to herein as automotive control units that have received a communication fault code, may be subject to a classification analysis for locating a power fault. In particular, the same features between multiple automobile control units are found, the cause of the bus fault occurrence is deduced and the probability that the problem is most likely to occur is calculated. The same feature may be that the communication fault codes are the same and/or the bus connection relationships are the same, and the derived relationships generally have the following cases: if it is the same power supply domain, then whether a bus fault is caused by a power supply reason is analyzed; if it is the same bus, then a bus fault caused by bus, branch line and unit reasons is analyzed; if it is an automobile gateway control domain, then analyzing whether a bus fault is caused by an automobile gateway; in the case of adjacent and sequential relationships, the cause and location of the bus fault is analyzed.

After the completion of power supply line troubleshooting, for the case of being able to read the communication fault code, general automobile manufacturers have given more effective maintenance guidance suggestions for the communication fault code, and their maintenance suggestions can be cited. weighting the communication fault codes according to an influence range of the communication fault codes, a causal relationship between the communication fault codes and a severity degree if there are a plurality of the communication fault codes; prioritizing a plurality of the communication fault codes according to a predetermined rule; prioritizing bus fault location for the communication fault code with high priority.

Step S13: analyzing a layout attribute of a part of the automobile control unit if an answering signal fed back by the part of the automobile control unit is received, analyzing a power supply state of the part of the automobile control unit according to the layout attribute, determining a to-be-measured bus range according to the layout attribute and the power supply state, and measuring a bus electrical characteristic within the bus range to locate a bus fault.

According to an embodiment of the invention, if an answering signal fed back by a part of the automobile control units is received, i.e. a part of the automobile control units is unresponsive to communication, a bus power supply state analysis is also performed first, and specifically, the layout properties of a part of the automobile control units are analyzed first, and the layout properties of a part of the automobile control units without feeding back an answering signal can be analyzed according to the topology structure of the automobile power supply line. The layout attributes include at least one of: whether to connect the same automobile gateway, whether to be located in the same power supply domain, whether to be located in the same bus and the adjacent and sequential relationship between some of the automobile control units.

A power supply state to a part of the automobile control units is further analyzed according to the layout attribute. If the part of the automobile control units is located in the same automobile gateway control domain, it is analyzed whether the bus fault is caused by an automobile gateway. If the parts of the automobile control units are located in the same power domain, it is analyzed whether a bus fault is caused by power supply. If the part of the automobile control unit has the same bus, it is analyzed that the bus fault is caused by a bus, a branch line, and a unit. If the portion of the automobile control units are in an adjacent and sequential relationship, the cause and location of the bus fault is analyzed. For example, it is compared whether other nodes of the same level or nodes of the higher level are working properly. If other automobile control units at the same level can work normally, the bus fault mainly occurs in the automobile control unit itself (including power supply or communication); otherwise, reverse tracing is required to find the position most likely having bus fault.

According to an embodiment of the invention, after the troubleshooting of a power supply line is completed, a to-be-measured bus range corresponding to a part of the automobile control unit is determined according to a layout attribute and a power supply state calculation, and a measurement tool such as an oscilloscope and/or a multimeter can be configured to measure an electrical characteristic of the bus at the determined to-be-measured bus range for analyzing a specific reason of fault. The electrical characteristics include: bus waveform, voltage, resistance, and current. Said locating a bus fault according to the electrical characteristic application guidance mode includes: analyzing a bus fault type according to the electrical characteristic, the bus fault type including: one of open bus, short circuit to ground, short circuit to power supply, short circuits among buses, bus interference; locating a bus fault according to the bus fault type combined algorithm application guide mode, wherein the algorithm includes one of a node method, a plug-in method, a short circuit method and a disturbance method.

Specifically, in a case where some automobile control units are unable to communicate, the line electrical characteristics of the bus are generally measured by a measuring tool such as an oscilloscope or a multimeter, and the specific fault causes are analyzed. According to the wiring characteristics of the bus, the bus range and position to be measured are calculated, the user is instructed to collect the communication waveform or corresponding voltage, resistance, current and other signals, and the fault type is analyzed according to the collected electrical characteristics. Common fault types include open bus, short circuit to ground, short circuit to power supply, short circuits among buses, and bus interference After analyzing the fault types, it is necessary to apply optimization algorithm to assist users to quickly locate the specific position of the fault. Generally, a node method, a plug-in method, a short-circuit method, a disturbance method and other methods are configured to assist users to quickly locate the fault, which can be reflected in the bus troubleshooting scheme, and guide users to complete the troubleshooting process. According to an embodiment of the invention, through intelligent analysis, a series of algorithms are applied to quickly analyze the fault causes and delineate the physical scope of the fault, which improves the efficiency in troubleshooting by the user, reduces the difficulty in troubleshooting by the user, supports the fault cause analysis and also supports the fault location.

According to an embodiment of the invention, if the communication fault code is included in the answering signal fed back by the part of the automobile control unit received, after the power supply state analysis of the automobile control unit is completed, the communication fault code fed back is analyzed, and the detailed analysis method is the same as that in step S12 and will not be described again.

Step S14: determining the to-be-measured bus range and measuring the bus electrical characteristic within the bus range to locate a bus fault if no answering signal fed back by the automobile control unit is received.

According to an embodiment of the invention, since no answering signal fed back by any automobile control unit is received, indicating that all automobile control units cannot communicate, the to-be-measured bus range is determined to be the bus range corresponding to all buses. Within the range of this bus, the measured bus electrical characteristics may be described as in step S13 and will not be described in detail herein.

According to an embodiment of the invention, determining a troubleshooting scheme according to the reason and location of the bus fault once a bus fault is located; troubleshooting the bus fault according to the troubleshooting scheme. For example, for the case of being able to read a communication fault code, a general automobile manufacturer gives a relatively effective maintenance guiding suggestion for the communication fault code, and can refer to the troubleshooting suggestion thereof; and for the case of having multiple communication fault codes, a communication fault code with a high priority can be preferentially troubleshot according to the priority ranking method in step S 11. For other bus faults, a troubleshooting scheme may be determined and configured to troubleshoot based on the cause and position located in step S12 or step S13.

After the troubleshooting is completed, the troubleshot result is verified, and if the bus fault has been excluded, the flow ends; the electrical characteristics are re-measured and the inspection scheme is recalculated until the bus fault is excluded if the bus fault has not been excluded. That is, according to an embodiment of the invention, the troubleshooting process is an iterative process because the conclusion of the fault analysis is a probability output, each time the probability of one troubleshooting situation is maximized. If the bus fault cannot be excluded with the currently calculated troubleshooting scheme, the next maintenance scheme most likely to exclude a bus fault needs to be calculated until the bus fault is excluded by the user. As specifically shown in FIG. 5, there are n reasons for a certain bus fault; firstly, one with the highest probability is selected, and the reason 1 with a probability of 50% in the figure is selected; a corresponding scheme 1 is obtained for the reason 1; and troubleshooting is performed according to the scheme 1, and the troubleshot result is verified after the troubleshooting is completed. If the bus fault is excluded, the process ends and the troubleshooting ends. If the bus fault has not been excluded, the most significant of the remaining causes is selected, as cause 2 in the figure. A corresponding scheme 2 is obtained for the reason 2; and troubleshooting is performed according to the scheme 2, and the troubleshot result is verified after the troubleshooting is completed. If the bus fault has not yet been excluded, following process continues to iterate until the bus fault is completely excluded. The iterative process includes instructing the user to re-measure the relevant line electrical characteristics, re-calculating the inspection scheme, re-scanning the system status, etc.

The automobile bus fault diagnosis method according to an embodiment of the present invention is relatively comprehensive, and supports bus fault check capable of communication, and also supports bus fault check incapable of communication, and supports most passenger automobiles, and also supports commercial automobiles, and supports bus fault cause analysis, and also supports bus fault point positioning; it has high integration, supports seamless connection of measurement tools, and makes an integrated scheme for bus fault analysis. It is easy to operate and has a high degree of intelligence. Related algorithms are provided to automatically calculate the type of bus fault and automatically calculate the location of bus fault. Users are guided to analyze the bus fault in the whole process by means of wizard. Through the analysis wizard, users are guided to troubleshoot the bus fault of automobile bus, which reduces the difficulty of troubleshooting, and it is applicable to experienced maintenance personnel and also applicable to less experienced maintenance personnel.

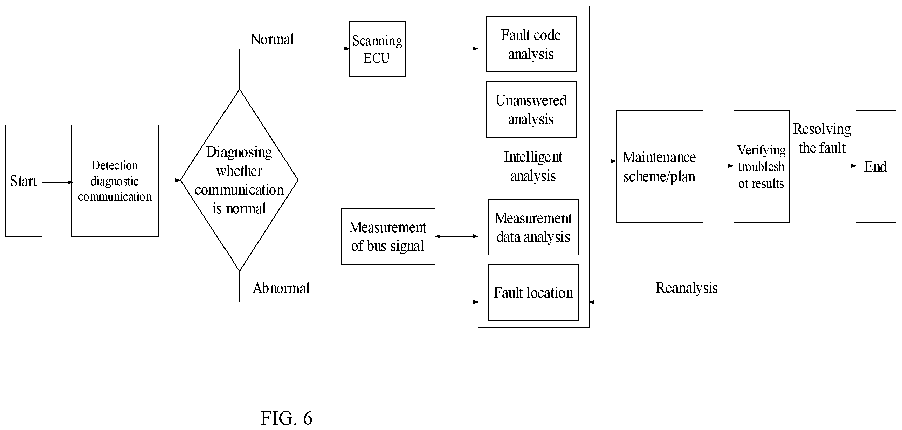

A complete automobile bus fault diagnosis method according to an embodiment of the present invention is shown in FIG. 6. After the automobile bus fault diagnosis method is started, the diagnosis communication is first inspected. Whether the diagnostic communication is normal is determined. If the diagnostic communication is normal, the ECU is scanned for intelligent analysis. If the communication fault code is read, the communication fault code analysis is performed, and the detailed analysis process is shown in step S12. If only a part of the answering signals fed back by the automobile control unit are received after scanning the ECU, i.e. a part of the automobile control unit communication is unanswered, an unanswered analysis is performed, see step S13 for details. If no answering signal fed back by the automobile control unit is received, i.e. the communication is abnormal, the bus signal is measured for intelligent analysis, and in particular, measurement data analysis and bus fault point positioning are performed according to the measured bus signal, see in particular step S14. After the intelligent analysis is completed, the maintenance scheme or plan is obtained for maintenance, and the maintenance result is verified. If the bus fault is resolved, i.e. the bus fault is excluded, the flow ends directly. If the bus fault is not resolved, re-analysis is required, including instructing the user to re-measure the relevant line electrical characteristics, re-calculating the inspection scheme, re-scanning the system status, etc.

According to an embodiment of the invention, a communication instruction is transmitted to the automobile to inspect a communication condition of each automobile control unit in the automobile; the communication fault code and a power supply state of the automobile control unit are analyzed to locate a bus fault if a communication fault code fed back by an automobile control unit is received; a layout attribute of the part of the automobile control unit is analyzed if an answering signal fed back by a part of the automobile control unit is received, a power supply state of the part of the automobile control unit is analyzed according to the layout attribute, a to-be-measured bus range is measured according to the layout attribute and the power supply state, and a bus electrical characteristic is measured within the bus range to locate a bus fault; the to-be-measured bus range is determined and the bus electrical characteristic within the bus range is measured to locate a bus fault; if no answering signal fed back by the automobile control unit is received, a to-be-measured bus range is determined, and bus electrical characteristics are measured within the bus range to locate a bus fault, communication-capable bus fault check is supported, and communication-incapable bus fault check is also supported, enabling to quickly locate a specific position of an automobile bus fault, and improving the efficiency of user troubleshooting.

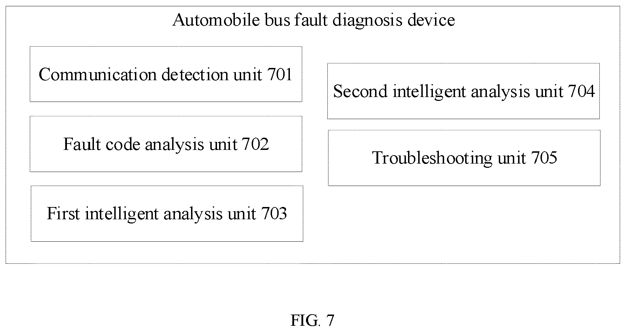

FIG. 7 is a schematic view showing a configuration of an automobile bus fault diagnosis apparatus according to an embodiment of the present invention. The automobile bus fault diagnosis device is applied to an electronic device. As shown in FIG. 7, the automobile bus fault diagnosis apparatus includes: a communication inspection unit 701, a fault code analysis unit 702, a first intelligent analysis unit 703, a second intelligent analysis unit 704, and a troubleshooting unit 705.

The communication inspection unit 701 is configured to transmit a communication instruction to the automobile to inspect a communication condition of each automobile control unit in the automobile; a fault code analysis unit 702 configured to analyze the communication fault code and a power supply state of the automobile control unit to locate a bus fault if a communication fault code fed back by an automobile control unit is received; a first intelligent analysis unit 703 is configured to analyze a layout attribute of a part of the automobile control unit if an answering signal fed back by the part of the automobile control unit is received, and analyze a power supply state of the part of the automobile control unit according to the layout attribute, and determine a to-be-measured bus range according to the layout attribute and the power supply state, and measure a bus electrical characteristic within the bus range to locate a bus fault; and a second intelligent analysis unit 704 is configured to determine the to-be-measured bus range and measure the bus electrical characteristic within the bus range to locate a bus fault if no answering signal fed back by the automobile control unit is received.

In an alternative, the layout attributes include at least one of: whether to connect the same automobile gateway, whether to be located in the same power supply domain, whether to be located in the same bus and the adjacent and sequential relationship between some of the automobile control units.

In an alternative, the fault code analysis unit 702 is configured to: if there are a plurality of the communication fault codes, weight the communication fault codes according to an influence range of the communication fault codes, a causal relationship between the communication fault codes and a severity degree; prioritize a plurality of the communication fault codes according to a predetermined rule; and prioritize bus fault location for the communication fault code with high priority.

In an alternative, the first intelligent analysis unit 703 is configured to: determine a to-be-measured bus range corresponding to a part of the automotive control unit according to the layout attribute and the power supply state; apply an oscilloscope and/or a multimeter to the determined to-be-measured bus range to measure an electrical characteristic of the bus, wherein the electrical characteristic includes: bus waveform, voltage, resistance and current; and locating a bus fault according to the electrical characteristic application guidance mode.

In an alternative, the first intelligent analysis unit 703 is configured to: said locating a bus fault according to the electrical characteristic application guidance mode includes: analyzing a bus fault type according to the electrical characteristic, the bus fault type including: one of open bus, short circuit to ground, short circuit to power supply, short circuits among buses, bus interference; locating a bus fault according to the bus fault type combined algorithm application guide mode, wherein the algorithm includes one of a node method, a plug-in method, a short circuit method and a disturbance method.

In an alternative, the service unit 705 is configured to: determine a troubleshooting scheme according to the reason and location of the bus fault once a bus fault is located; troubleshoot the bus fault according to the troubleshooting scheme.

In an alternative, the service unit 705 is configured to: verify the troubleshot result, and if the bus fault has been excluded, end the flow; re-measure electrical characteristics and recalculate the inspection scheme until the bus fault is excluded if the bus fault is not excluded.

According to an embodiment of the invention, a communication instruction is transmitted to the automobile to inspect a communication condition of each automobile control unit in the automobile; the communication fault code and a power supply state of the automobile control unit are analyzed to locate a bus fault if a communication fault code fed back by an automobile control unit is received; a layout attribute of the part of the automobile control unit is analyzed if an answering signal fed back by a part of the automobile control unit is received, a power supply state of the part of the automobile control unit is analyzed according to the layout attribute, a to-be-measured bus range is measured according to the layout attribute and the power supply state, and a bus electrical characteristic is measured within the bus range to locate a bus fault; the to-be-measured bus range is determined and the bus electrical characteristic within the bus range is measured to locate a bus fault; if no answering signal fed back by the automobile control unit is received, a to-be-measured bus range is determined, and bus electrical characteristics are measured within the bus range to locate a bus fault, communication-capable bus fault check is supported, and communication-incapable bus fault check is also supported, enabling to quickly locate a specific position of an automobile bus fault, and improving the efficiency of user troubleshooting.

Embodiments of the present invention provide a non-volatile computer storage medium having stored thereon at least one executable instruction for performing the method of automobile bus fault diagnosis in any of the method embodiments described above.

The executable instructions may be used, in particular, to cause a processor to perform the following operations:
transmitting a communication instruction to the automobile to inspect a communication condition of each automobile control unit in the automobile;
analyzing the communication fault code and a power supply state of the automobile control unit to locate a bus fault if a communication fault code fed back by an automobile control unit is received;
analyzing a layout attribute of a part of the automobile control unit if an answering signal fed back by the part of the automobile control unit is received, analyzing a power supply state of the part of the automobile control unit according to the layout attribute, determining a to-be-measured bus range according to the layout attribute and the power supply state, and measuring a bus electrical characteristic within the bus range to locate a bus fault; and
determining the to-be-measured bus range and measuring the bus electrical characteristic within the bus range to locate a bus fault if no answering signal fed back by the automobile control unit is received.

In an alternative, the layout attributes include at least one of: whether to connect the same automobile gateway, whether to be located in the same power supply domain, whether to be located in the same bus and the adjacent and sequential relationship between some of the automobile control units.

In an alternative, the executable instructions cause the processor to perform the operations of:
weighting the communication fault codes according to an influence range of the communication fault codes, a causal relationship between the communication fault codes and a severity degree if there are a plurality of the communication fault codes;
prioritizing a plurality of the communication fault codes according to a predetermined rule;
prioritizing bus fault location for the communication fault code with high priority.

In an alternative, the executable instructions cause the processor to perform the operations of:
determining a to-be-measured bus range corresponding to a part of the automotive control unit according to the layout attribute and the power supply state;
applying an oscilloscope and/or a multimeter to the determined to-be-measured bus range to measure an electrical characteristic of the bus, wherein the electrical characteristic includes: bus waveform, voltage, resistance and current; and
locating a bus fault according to the electrical characteristic application guidance mode.

In an alternative, the executable instructions cause the processor to perform the operations of:
analyzing a bus fault type according to the electrical characteristic, the bus fault type including: one of open bus, short circuit to ground, short circuit to power supply, short circuits among buses, and bus interference; and
locating a bus fault according to the bus fault type combined algorithm application guide mode, wherein the algorithm includes one of a node method, a plug-in method, a short circuit method and a disturbance method

In an alternative, the executable instructions cause the processor to perform the operations of:
determining a troubleshooting scheme according to the reason and location of the bus fault once a bus fault is located;
troubleshooting the bus fault according to the troubleshooting scheme.

In an alternative, the executable instructions cause the processor to perform the operations of:
verifying the troubleshot result, and if the bus fault has been excluded, ending the flow;
re-measuring the electrical characteristics and recalculating the inspection scheme until the bus fault is excluded if the bus fault has not been excluded.

According to an embodiment of the invention, a communication instruction is transmitted to the automobile to inspect a communication condition of each automobile control unit in the automobile; the communication fault code and a power supply state of the automobile control unit are analyzed to locate a bus fault if a communication fault code fed back by an automobile control unit is received; a layout attribute of the part of the automobile control unit is analyzed if an answering signal fed back by a part of the automobile control unit is received, a power supply state of the part of the automobile control unit is analyzed according to the layout attribute, a to-be-measured bus range is measured according to the layout attribute and the power supply state, and a bus electrical characteristic is measured within the bus range to locate a bus fault; the to-be-measured bus range is determined and the bus electrical characteristic within the bus range is measured to locate a bus fault; if no answering signal fed back by the automobile control unit is received, a to-be-measured bus range is determined, and bus electrical characteristics are measured within the bus range to locate a bus fault, communication-capable bus fault check is supported, and communication-incapable bus fault check is also supported, enabling to quickly locate a specific position of an automobile bus fault, and improving the efficiency of user troubleshooting.

An embodiment of the present invention provides an automobile bus fault diagnosis apparatus for performing the above-described automobile bus fault diagnosis method.

Embodiments of the present invention provide a computer program that can be invoked by a processor to cause a base station device to perform the method of automobile bus fault diagnosis in any of the method embodiments described above.

Embodiments of the present invention provide a computer program product including a computer program stored on a computer storage medium, the computer program including program instructions which, when executed by a computer, cause the computer to carry out a method of automobile bus fault diagnosis in any of the method embodiments described above.

The executable instructions may be used, in particular, to cause a processor to perform the following operations:
transmitting a communication instruction to the automobile to inspect a communication condition of each automobile control unit in the automobile;
analyzing the communication fault code and a power supply state of the automobile control unit to locate a bus fault if a communication fault code fed back by an automobile control unit is received;
analyzing a layout attribute of a part of the automobile control unit if an answering signal fed back by the part of the automobile control unit is received, analyzing a power supply state of the part of the automobile control unit according to the layout attribute, determining a to-be-measured bus range according to the layout attribute and the power supply state, and measuring a bus electrical characteristic within the bus range to locate a bus fault; and
determining the to-be-measured bus range and measuring the bus electrical characteristic within the bus range to locate a bus fault if no answering signal fed back by the automobile control unit is received.

In an alternative, the layout attributes include at least one of: whether to connect the same automobile gateway, whether to be located in the same power supply domain, whether to be located in the same bus and the adjacent and sequential relationship between some of the automobile control units.

In an alternative, the executable instructions cause the processor to perform the operations of:
weighting the communication fault codes according to an influence range of the communication fault codes, a causal relationship between the communication fault codes and a severity degree if there are a plurality of the communication fault codes;
prioritizing a plurality of the communication fault codes according to a predetermined rule;
prioritizing bus fault location for the communication fault code with high priority.

In an alternative, the executable instructions cause the processor to perform the operations of:
determining a to-be-measured bus range corresponding to a part of the automotive control unit according to the layout attribute and the power supply state;
applying an oscilloscope and/or a multimeter to the determined to-be-measured bus range to measure an electrical characteristic of the bus, wherein the electrical characteristic includes: bus waveform, voltage, resistance and current; and
locating a bus fault according to the electrical characteristic application guidance mode.

In an alternative, the executable instructions cause the processor to perform the operations of:
analyzing a bus fault type according to the electrical characteristic, the bus fault type including: one of open bus, short circuit to ground, short circuit to power supply, short circuits among buses, and bus interference; and
locating a bus fault according to the bus fault type combined algorithm application guide mode, wherein the algorithm includes one of a node method, a plug-in method, a short circuit method and a disturbance method

In an alternative, the executable instructions cause the processor to perform the operations of:
determining a troubleshooting scheme according to the reason and location of the bus fault once a bus fault is located;
troubleshooting the bus fault according to the troubleshooting scheme.

In an alternative, the executable instructions cause the processor to perform the operations of:
verifying the troubleshot result, and if the bus fault has been excluded, ending the flow;
re-measuring the electrical characteristics and recalculating the inspection scheme until the bus fault is excluded if the bus fault has not been excluded.

According to an embodiment of the invention, a communication instruction is transmitted to the automobile to inspect a communication condition of each automobile control unit in the automobile; the communication fault code and a power supply state of the automobile control unit are analyzed to locate a bus fault if a communication fault code fed back by an automobile control unit is received; a layout attribute of the part of the automobile control unit is analyzed if an answering signal fed back by a part of the automobile control unit is received, a power supply state of the part of the automobile control unit is analyzed according to the layout attribute, a to-be-measured bus range is measured according to the layout attribute and the power supply state, and a bus electrical characteristic is measured within the bus range to locate a bus fault; the to-be-measured bus range is determined and the bus electrical characteristic within the bus range is measured to locate a bus fault; if no answering signal fed back by the automobile control unit is received, a to-be-measured bus range is determined, and bus electrical characteristics are measured within the bus range to locate a bus fault, communication-capable bus fault check is supported, and communication-incapable bus fault check is also supported, enabling to quickly locate a specific position of an automobile bus fault, and improving the efficiency of user troubleshooting.

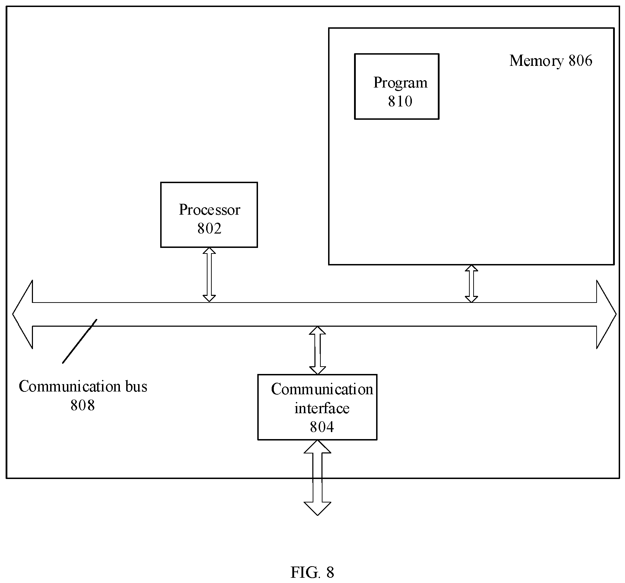

FIG. 8 shows a schematic diagram of a computing device according to an embodiment of the present invention, and the specific embodiment of the present invention does not limit the specific implementation of the device.

As shown in FIG. 8, the computing device may include: a processor 802, a Communications Interface 804, a memory 806, and a communication bus 808.

The processor 802, the communication interface 804, and the memory 806 communicate with each other over a communication bus 808. A communication interface 804 configured to communicate with network elements of other devices such as a network element of a client or other servers, etc. The processor 802 is configured to execute the program 810, may specifically perform the steps described above in the embodiment of the automobile bus fault diagnosis method.

In particular, program 810 may include program code including computer operating instructions.

The processor 802 may be a central processing unit CPU, or an Application Specific Integrated Circuit (ASIC), or one or more integrated circuits configured to implement embodiments of the present invention. The device includes one or more processors, which may be of the same type, such as one or more CPUs; it may also be a different type of processor, such as one or more CPUs and one or more ASICs.

The memory 806 is configured to store a program 810. The memory 806 may include high-speed RAM memory, and may also include non-volatile memory, such as at least one disk memory.

The program 810 may be used, in particular, to cause the processor 802 to perform the following operations:
transmitting a communication instruction to the automobile to inspect a communication condition of each automobile control unit in the automobile;
analyzing the communication fault code and a power supply state of the automobile control unit to locate a bus fault if a communication fault code fed back by an automobile control unit is received;
analyzing a layout attribute of a part of the automobile control unit if an answering signal fed back by the part of the automobile control unit is received, analyzing a power supply state of the part of the automobile control unit according to the layout attribute, determining a to-be-measured bus range according to the layout attribute and the power supply state, and measuring a bus electrical characteristic within the bus range to locate a bus fault; and
determining the to-be-measured bus range and measuring the bus electrical characteristic within the bus range to locate a bus fault if no answering signal fed back by the automobile control unit is received.

In an alternative, the layout attributes include at least one of: whether to connect the same automobile gateway, whether to be located in the same power supply domain, whether to be located in the same bus and the adjacent and sequential relationship between some of the automobile control units.

In an alternative, the program 810 causes the processor to perform the following operations:
weighting the communication fault codes according to an influence range of the communication fault codes, a causal relationship between the communication fault codes and a severity degree if there are a plurality of the communication fault codes;
prioritizing a plurality of the communication fault codes according to a predetermined rule;
prioritizing bus fault location for the communication fault code with high priority.

In an alternative, the program 810 causes the processor to perform the following operations:
determining a to-be-measured bus range corresponding to a part of the automotive control unit according to the layout attribute and the power supply state;
applying an oscilloscope and/or a multimeter to the determined to-be-measured bus range to measure an electrical characteristic of the bus, wherein the electrical characteristic includes: bus waveform, voltage, resistance and current; and
locating a bus fault according to the electrical characteristic application guidance mode.

In an alternative, the program 810 causes the processor to perform the following operations:
analyzing a bus fault type according to the electrical characteristic, the bus fault type including: one of open bus, short circuit to ground, short circuit to power supply, short circuits among buses, and bus interference; and
locating a bus fault according to the bus fault type combined algorithm application guide mode, wherein the algorithm includes one of a node method, a plug-in method, a short circuit method and a disturbance method

In an alternative, the program 810 causes the processor to perform the following operations:
determining a troubleshooting scheme according to the reason and location of the bus fault once a bus fault is located;
troubleshooting the bus fault according to the troubleshooting scheme.

In an alternative, the program 810 causes the processor to perform the following operations:
verifying the troubleshot result, and if the bus fault has been excluded, ending the flow;
re-measuring the electrical characteristics and recalculating the inspection scheme until the bus fault is excluded if the bus fault has not been excluded.

According to an embodiment of the invention, a communication instruction is transmitted to the automobile to inspect a communication condition of each automobile control unit in the automobile; the communication fault code and a power supply state of the automobile control unit are analyzed to locate a bus fault if a communication fault code fed back by an automobile control unit is received; a layout attribute of the part of the automobile control unit is analyzed if an answering signal fed back by a part of the automobile control unit is received, a power supply state of the part of the automobile control unit is analyzed according to the layout attribute, a to-be-measured bus range is measured according to the layout attribute and the power supply state, and a bus electrical characteristic is measured within the bus range to locate a bus fault; the to-be-measured bus range is determined and the bus electrical characteristic within the bus range is measured to locate a bus fault; if no answering signal fed back by the automobile control unit is received, a to-be-measured bus range is determined, and bus electrical characteristics are measured within the bus range to locate a bus fault, communication-capable bus fault check is supported, and communication-incapable bus fault check is also supported, enabling to quickly locate a specific position of an automobile bus fault, and improving the efficiency of user troubleshooting.

The algorithms or displays presented herein are not inherently related to any particular computer, virtual system, or other devices. Various general purpose systems may also be used with the teachings based herein. The structure required to construct such a system is apparent from the above description. Further, embodiments of the present invention are not directed to any particular programming language. It will be appreciated that a variety of programming languages may be configured to implement the teachings of the invention as described herein, and that the above description of specific languages is provided to disclose the best mode of carrying out the invention.

In the description provided herein, numerous specific details are set forth. However, it is understood that embodiments of the present invention may be practiced without these specific details. In some instances, well-known methods, structures and techniques have not been shown in detail in order not to obscure the understanding of this description.

Similarly, it should be appreciated that in the above description of example embodiments of the invention, various features of the embodiments of the invention are sometimes grouped together in a single embodiment, figure, or description thereof for the purpose of streamlining the invention and aiding in the understanding of one or more of the various inventive aspects. However, the disclosed methods are not to be interpreted as reflecting an intention that the claimed invention requires more features than are expressly recited in each claim.

It will be appreciated by a person skilled in the art that the modules in the devices in the embodiments may be adapted and arranged in one or more devices different from the embodiment. Modules or units or components in an embodiment may be combined into one module or unit or component and may be divided into a plurality of sub-modules or sub-units or sub-components. All of the features disclosed in this description (including any accompanying claims, abstract and drawings), and all of the processes or elements of any method or device so disclosed, may be combined in any combination, except combinations where at least some of such features and/or processes or elements are mutually exclusive. Each feature disclosed in this description (including any accompanying claims, abstract and drawings) may be replaced by alternative features serving the same, equivalent or similar purpose, unless expressly stated otherwise.

It should be noted that the above-mentioned embodiments illustrate rather than limit the application, and that a person skilled in the art will be able to design alternative embodiments without departing from the scope of the appended claims. In the claims, any reference signs placed between parentheses shall not be construed as limiting the claim. The word "including" does not exclude the presence of elements or steps other than those listed in a claim. The word "a" or "an" preceding an element does not exclude the presence of a plurality of such elements. The invention can be implemented by means of hardware including several distinct elements, and by means of a suitably programmed computer. In the unit claims enumerating several means, several of these means can be embodied by one and the same item of hardware. The use of the words first, second, third, etc. does not denote any order. These words may be interpreted as names. The steps in the above embodiments are not to be construed as limiting the order of execution unless otherwise specified.

## Claims

1. An automobile bus fault diagnosis method, **characterized by** comprising:
transmitting a communication instruction to the automobile to inspect a communication condition of each automobile control unit in the automobile;
analyzing the communication fault code and a power supply state of the automobile control unit to locate a bus fault if a communication fault code fed back by an automobile control unit is received;
analyzing a layout attribute of a part of the automobile control unit if an answering signal fed back by the part of the automobile control unit is received, analyzing a power supply state of the part of the automobile control unit according to the layout attribute, determining a to-be-measured bus range according to the layout attribute and the power supply state, and measuring a bus electrical characteristic within the bus range to locate a bus fault; and
determining the to-be-measured bus range and measuring the bus electrical characteristic within the bus range to locate a bus fault if no answering signal fed back by the automobile control unit is received.

2. The method according to claim 1, **characterized in that** the layout attribute comprises at least one of:
whether to connect the same automobile gateway, whether to be located in the same power supply domain, whether to be located in the same bus and the adjacent and sequential relationship between some of the automobile control units.

3. The method according to claim 1, **characterized in that** said analyzing the communication fault code comprises:
weighting the communication fault codes according to an influence range of the communication fault codes, a causal relationship between the communication fault codes and a severity degree if there are a plurality of the communication fault codes;
prioritizing a plurality of the communication fault codes according to a predetermined rule;
prioritizing bus fault location for the communication fault code with high priority.

4. The method according to claim 1, **characterized in that** said determining a to-be-measured bus range according to the layout attribute and the power supply state and measuring a bus electrical characteristic within the bus range to locate a bus fault comprises:
determining a to-be-measured bus range corresponding to a part of the automotive control unit according to the layout attribute and the power supply state;
applying an oscilloscope and/or a multimeter to the determined to-be-measured bus range to measure an electrical characteristic of the bus, wherein the electrical characteristic includes: bus waveform, voltage, resistance and current; and
locating a bus fault according to the electrical characteristic application guidance mode.

5. The method according to claim 4, **characterized in that** said locating a bus fault according to the electrical characteristic application guidance mode comprises:
analyzing a bus fault type according to the electrical characteristic, the bus fault type including: one of open bus, short circuit to ground, short circuit to power supply, short circuits among buses, and bus interference; and
locating a bus fault according to the bus fault type combined algorithm application guide mode, wherein the algorithm includes one of a node method, a plug-in method, a short circuit method and a disturbance method.

6. The method according to claim 1, **characterized in that** the automobile bus fault diagnosis method further comprises:
determining a troubleshooting scheme according to the reason and location of the bus fault once a bus fault is located;
troubleshooting the bus fault according to the troubleshooting scheme.

7. The method according to claim 6, **characterized in that** said troubleshooting the bus fault according to the troubleshooting scheme further comprises:
verifying the troubleshot result, and if the bus fault has been excluded, ending the flow;
re-measuring the electrical characteristics and recalculating the inspection scheme until the bus fault is excluded if the bus fault has not been excluded.

8. An automobile bus fault diagnosis apparatus, **characterized by** comprising:
a communication inspecting unit configured to transmit a communication instruction to the automobile to inspect a communication condition of each automobile control unit in the automobile;
a fault code analysis unit configured to analyze the communication fault code and a power supply state of the automobile control unit to locate a bus fault if a communication fault code fed back by an automobile control unit is received;
a first intelligent analysis unit configured to analyze a layout attribute of a part of the automobile control unit if an answering signal fed back by the part of the automobile control unit is received, analyze a power supply state of the part of the automobile control unit according to the layout attribute, determine a to-be-measured bus range according to the layout attribute and the power supply state, and measure a bus electrical characteristic within the bus range to locate a bus fault; and
a second intelligent analysis unit configured to determine the to-be-measured bus range and measure the bus electrical characteristic within the bus range to locate a bus fault if no answering signal fed back by the automobile control unit is received.

9. A computing device, **characterized by** comprising: a processor, a memory, a communication interface, and a communication bus, wherein the processor, the memory, and the communication interface communicate with each other through the communication bus;
the memory is configured to store at least one executable instruction that causes the processor to perform the steps of the automobile bus fault diagnosis method according to any one of claims 1-7.

10. A computer storage medium, **characterized in that** the computer storage medium has stored therein at least one executable instruction for causing the processor to perform the steps of the automobile bus fault diagnosis method according to any one of claims 1-7.
